# EUROPÄISCHE PATENTSCHRIFT

(11) **EP 3 224 541 B1**
(45) Veröffentlichungstag und Bekanntmachung des Hinweises auf die Patenterteilung: **06.03.2019**
(21) Anmeldenummer: 16702044.5
(22) Anmeldetag: 20.01.2016
(51) Int. Cl.: F22B 1/18

(54) **ABHITZEDAMPFERZEUGER**
WASTE HEAT STEAM GENERATOR
GÉNÉRATEUR DE VAPEUR À RÉCUPÉRATION DE CHALEUR

(30) Priorität: 23.01.2015 EP 15152291
(43) Veröffentlichungstag der Anmeldung: 04.10.2017
(73) Patentinhaber: Siemens Aktiengesellschaft, 80333 München (DE)
(72) Erfinder: ZUBROD, Horst, 91080 Uttenreuth (DE)
(86) Internationale Anmeldenummer: PCT/EP2016/051144
(87) Internationale Veröffentlichungsnummer: WO 2016/116509

(56) Entgegenhaltungen:
- EP-A1- 0 359 735
- EP-A1- 2 385 223
- WO-A2-2005/068904
- CN-A- 1 086 292
- DE-A1- 4 303 613
- US-A- 5 159 897

## Beschreibung

Die Erfindung betrifft einen Abhitzedampferzeuger gemäß dem Oberbegriff des Anspruchs 1, so wie beispielsweise aus der EP 0 359 735 A1 bekannt.

Bei einer Gas- und Dampfturbinenanlage wird das aus einer Gasturbine austretende Abgas zur Erzeugung von Dampf für die Dampfturbine genutzt. Die Wärmeübertragung erfolgt dabei in einem der Gasturbine nachgeschalteten Abhitzedampferzeuger, bei dem in einem Abgaskanal eine Anzahl von Heizflächen zur Speisewasservorwärmung, zur Dampferzeugung und auch zur anschließenden Dampfüberhitzung angeordnet sind. Die Heizflächen sind dazu in den Speisewasser-Dampf-Kreislauf der Dampfturbine geschaltet und werden so nacheinander von dem darin strömenden Medium durchströmt.

Für den der Gasturbine abgasseitig nachgeschalteten Abhitzedampferzeuger kommen dabei mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von Verdampferrohren der Verdampferheizflächen zu einer Verdampfung des Strömungsmediums in einem einmaligen Durchlauf.

Beim Anfahren des Abhitzedampferzeugers kann es zu einem sogenannten Wasserausstoß kommen. Dieser entsteht, wenn die infolge der nach dem Start beginnenden Beheizung der Verdampferrohre eintretende Verdampfung des darin befindlichen Strömungsmediums erstmals einsetzt. Geschieht dies beispielsweise in der Mitte des jeweiligen Verdampferrohres, wird die stromabwärts vorhandene Wassermenge (auch als Wasserpfropfen bezeichnet) aus dem jeweiligen Verdampferrohr hinausgeschoben. Um sicher auszuschließen, dass unverdampftes Strömungsmedium aus den Verdampferrohren in die nachgeschalteten Überhitzerheizflächen gelangen kann, ist zwischen den Verdampferheizflächen und den nachgeschalteten Überhitzerheizflächen üblicherweise ein Wasserabscheider vorgesehen. Abgeschiedenes Wasser wird in diesem Wasserabscheider dann einer Entspannungseinrichtung zugeführt. Der bei der Entspannung in der atmosphärischen Entspannungseinrichtung entstehende Dampf wird üblicherweise an die Umgebung abgegeben, was wesentlich zum Wasserverlust beim Anfahren des Abhitzekessels beiträgt. Das bei der Entspannung in der atmosphärischen Entspanner anfallende Wasser kann wieder dem Speisewasser-Dampf-Kreislauf zugeführt werden. Das in den atmosphärischen Entspanner geführte Wasser erhöht die Energieverluste beim Anfahren des Abhitzedampferzeugers.
Soll nun ein solcher Wasserausstoß beim Anfahren weitestgehend vermieden werden, würde eine naheliegende Lösung darin bestehen, dass den Vorwärmerheizflächen ein Ventil nachgeschaltet ist, so dass die in den nachgeschaltenen Verdampferheizflächen einströmende Speisewassermenge geregelt werden kann. Hierbei muss jedoch das Vorwärmersystem für einen höheren Pumpenenddruck ausgelegt werden, was zu Mehrkosten führt.
Aufgabe der Erfindung ist es, einen Abhitzedampferzeuger bereit zu stellen, der die zuvor beschriebenen Nachteile beim Anfahren überwindet.
Diese Aufgabe wird mit dem Abhitzedampferzeuger mit den Merkmalen des Anspruchs 1 gelöst.
Dadurch, dass außerhalb des Abgaskanals und speisewasserseitig zwischen der zumindest einen Vorwärmerheizfläche und der zumindest einen Verdampferheizfläche ein Überhubrohrsystem angeordnet ist, das so ausgebildet ist, dass Speisewasser nach vollständiger Befüllung der zumindest einen Vorwärmerheizfläche in einem Steigrohr des Überhubrohrsystems einen Überlauf erreicht und so über ein Fallrohr in die zumindest eine Verdampferheizfläche gelangt, kann der Wasserstand in der zumindest einen Verdampferheizfläche trotz vollständig gefüllter Vorwärmerheizfläche(n) beliebig eingestellt werden. Da im Gegensatz zu der bekannten Lösung kein Ventil hinter den Vorwärmerheizflächen vorgesehen ist, können diese Druckteile für den niedrigeren Auslegungsdruck auf der Dampfseite des Abhitzedampferzeugers ausgelegt werden.
Insgesamt kommt es so mit der erfindungsgemäßen Anordnung zu einer deutlichen Reduzierung des Wasserverlustes beim Anfahren des Abhitzedampferzeugers und damit zu geringeren Energieverlusten. Zudem sind im Vergleich zu der bekannten Lösung die Kosten für den erfindungsgemäßen Abhitzedampferzeuger deutlich geringer. Weiterhin ist durch die erfindungsgemäße Ausbildung und Anordnung des Abhitzedampferzeugers mit dem Überhubrohrsystem das Economizer-System, bestehend aus der zumindest einen Vorwärmerheizfläche, immer vollständig gefüllt, so dass der nachgeschaltete Wasserabscheider niedriger aufgehängt werden kann. Dies führt zu kürzeren Rohrleitungen in diesem Bereich und somit zu einer weiteren Kostenersparnis.

Erfindungsgemäß ist zwischen der zumindest einen Verdampferheizfläche und einer atmosphärische Entspannungseinrichtung, eine Entwässerungsleitung mit zumindest einem Entwässerungsventil zur Entwässerung der zumindest einen Verdampferheizfläche vorgesehen. Vorzugsweise ist zwischen dem Überlauf des Überhubrohrsystems und einer Dampfableitung des Wasserabscheiders eine Entlüftungsleitung mit einem Entlüftungsventil vorgesehen. Mit den Ventilen, die in diesen Hilfsleitungen angeordnet sind, kann der Wasserstand des Speisewassers in der zumindest einen Verdampferheizfläche vor jedem Startzustand unabhängig vom Systemdruck eingepegelt werden.
Um den Wasserstand in den Verdampferheizflächen zu erfassen ist eine geeignete Höhenstandsmessung zu installieren. Dazu ist bevorzugt parallel zu der zumindest einen Verdampferheizfläche eine Messleitung und eine Druckmesseinrichtung zur Höhenstandsmessung des Speisewassers in der zumindest einem Verdampferheizfläche vorgesehen.

Die Erfindung soll nun anhand der nachfolgenden Figuren beispielhaft erläutert werden. Es zeigen:
- FIG 1: schematisch eine bekannte Anordnung eines Abhitzedampferzeugers;
- FIG 2: schematisch eine bekannte Anordnung einer verbesserten Lösung eines Abhitzedampferezeugers;
- FIG 3: schematisch eine erfindungsgemäße Ausbildung und Anordnung eines Abhitzedampferezugers.

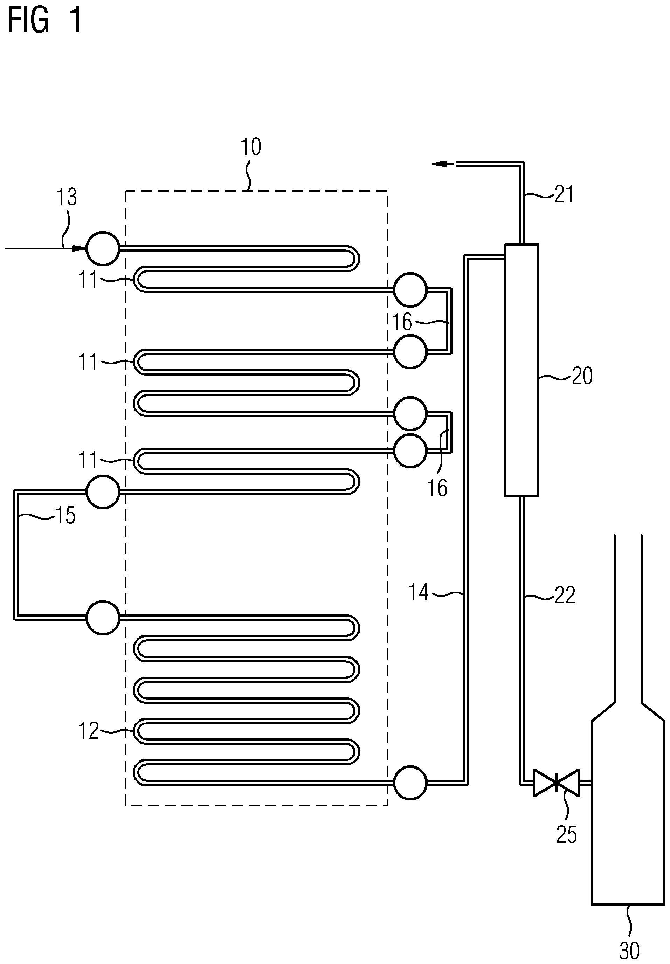

In FIG 1 ist sehr schematisch der prinzipielle Aufbau heute bekannter Abhitzedampferzeuger in stehender Bauweise gezeigt. Durch den Abgaskanal 10 des Abhitzedampferzeugers strömt von unten nach oben Abgas aus einer nicht näher dargestellten Gasturbine. Innerhalb des Abgaskanals 10 sind in vertikaler Richtung mehrere Heizflächen 11 und 12 angeordnet, die von einem Strömungsmedium aus dem Speisewasser-Dampf-Kreislauf einer Dampfturbine durchströmt werden. Dabei wird Wärme von dem Abgas auf das Strömungsmedium übertragen und kann so für die weitere Energieumwandlung in der Dampfturbine genutzt werden, so dass sich insgesamt ein höherer Wirkungsgrad für eine Gas- und Dampfturbinenanlage ergibt.

Die verschiedenen Heizflächen sind so in dem Abgaskanal 10 angeordnet, dass prinzipiell die Vorwärmerheizflächen 11 abgasseitig der zumindest einen Verdampferheizfläche 12 und weiteren nicht dargestellten Überhitzerheizflächen nachgeschaltet sind. Heute bekannte Anordnungen zeigen aber einen deutlich komplexeren Aufbau mit teilweise ineiandergreifenden Heizflächenanordnungen. Strömungsmediumseitig sind dagegen die Vorwärmerheizflächen 11 der eigentlichen Verdampferheizfläche 12 nachgeschaltet, so dass kühles in die Vorwärmerheizflächen 11 einströmendes Speisewasser 13 im kälteren Teil des Abgaskanals 10 moderat erhitzt wird und erst anschließend im heißeren Teil des Abgaskanals 10 in den dort angeordneten Verdampferheizflächen 12 verdampft wird.

Jede der Heizflächen 11 und 12 besteht aus einer Vielzahl von nebeneinander angeordneten Rohren die über jeweilige - schematisch dargestellte - Sammler an den Ein- und Ausgängen der Heizflächen 11 und 12 miteinander in Verbindung stehen, so dass es zu einer Vergleichmäßigung des durchströmenden Strömungsmediums durch den jeweiligen Rohrverbund einer Heizfläche kommt. In der in FIG 1 dargestellten Anordnung sind im Abgaskanal 10 drei Vorwämerheizflächen 11 angeordnet, die über entsprechende Sammler und Verbindungsleitungen 16 miteinander verbunden sind. Anschließend wird das aus der letzten Vorwärmerheizfläche austretende Strömungsmedium über eine weitere Verbindungsleitung 15 in die Verdampferheizfläche 12 geführt. Am Ausgang der hier dargestellten einzigen Verdampferheizfläche 12 ist über einen weiteren Sammler und eine weitere Verbindungsleitung 14 ein Wasserabscheider 20 angebunden. Beim Anfahren des Abhitzedampferzeugers aus der Verdampferheizfläche 12 ausgestoßenes unverdampftes Strömungsmedium wird so zusammen mit verdampftem Strömungsmedium in den Wasserabscheider 20 eingeleitet und dort getrennt. Das verdampfte Strömungsmedium kann über eine Dampfleitung 21 beispielsweise einer weiteren Überhitzerheizfläche zugeführt werden, während das unverdampfte Strömungsmedium über ein Ablaufventil 25 und eine atmosphärische Entspannungseinrichtung 30 teilweise wieder als Speiswasser dem Speiswasser-Dampf-Kreislauf zugeführt werden kann.

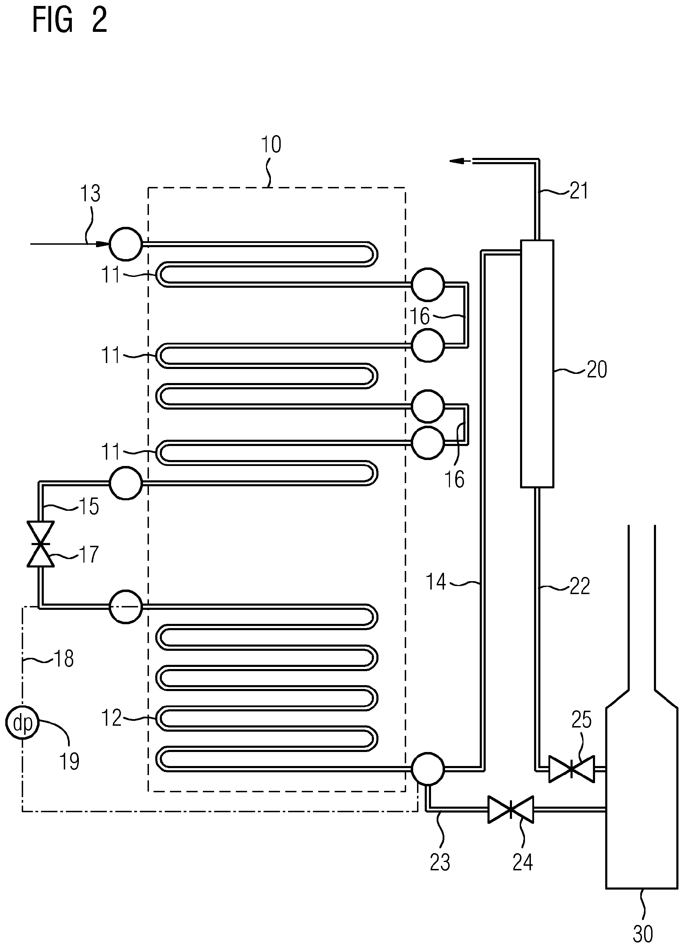

Im Gegensatz zu der in FIG 1 gezeigten Anordnung, bei der alle Heizflächen 11 und 12 vor dem Anfahren vollständig gefüllt sein müssen, zeigt FIG 2 eine Anordnung bei der der Zulauf von Speisewasser in die Verdampferheizfläche 12 geregelt werden kann. Dazu ist in der Verbindungsleitung 15 zwischen der letzten Vorwärmerheizfläche und der Verdampferheizfläche 12 ein Ventil 17, sowie zwischen Verdampferheizfläche 12 und atmosphärischer Entspannungseinrichtung 30 eine Entwässerungsleitung 23 mit einem Ventil 24 vorgesehen. Weiterhin ist parallel zu der Verdampferheizfläche 12 eine Messleitung 18 und eine Druckmesseinrichtung 19 zur Höhenstandsmessung des Speisewassers in der Verdampferheizfläche 12 vorgesehen. Durch diese, mittels der Ventile 17 und 24 regelbare (Teil-) Befüllung der Verdampferheizfläche 12, kann so beim Anfahren der Wasserausstoß aus der Verdampferheizfläche 12 reduziert werden.

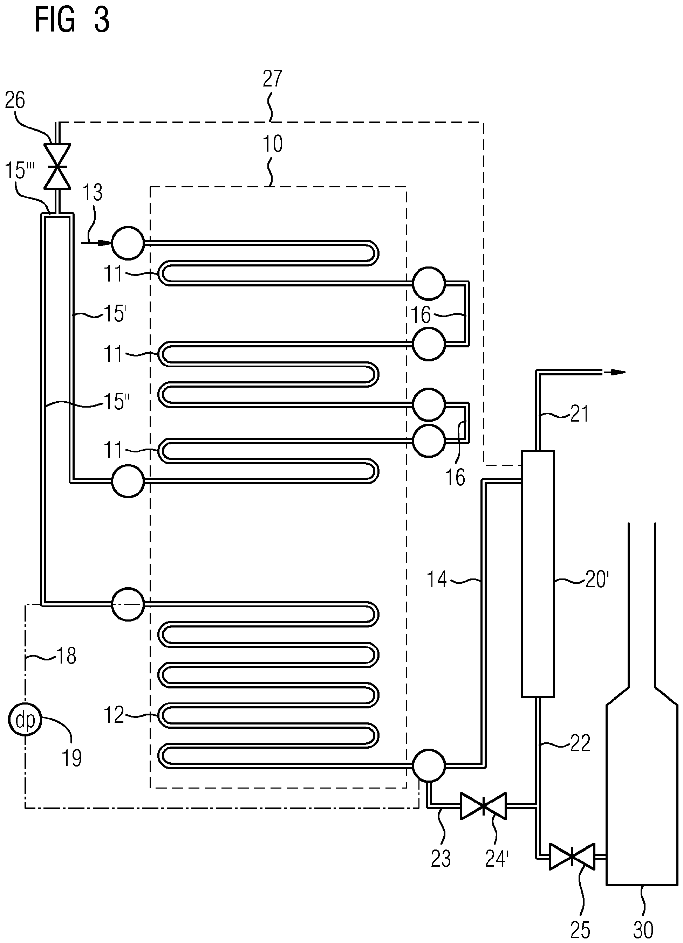

Eine deutliche Verbesserung kann erzielt werden, wenn wie in FIG 3 dargestellt, außerhalb des Abgaskanals 10 und speisewasserseitig zwischen der letzten der Vorwärmeheizflächen 11 und der Verdampferheizfläche 12 ein Überhubrohrsystem angeordnet ist, das so ausgebildet ist das Speisewasser nach vollständiger Befüllung der Vorwärmerheizflächen 11 in einem Steigrohr 15' des Überhubrohrsystems einen Überlauf 15''' erreicht und so über ein Fallrohr 15" in die Verdampferheizfläche 12 gelangt. Im Gegensatz zu der in FIG 2 gezeigten Anordnung kann hier Speisewasser, ohne weitere Druckbeaufschlagung in den Vorwärmerheizflächen 11, geregelt in die nachgeschaltete Verdampferheizfläche 12 eingeleitet werden. Die Verdampferheizfläche 12 kann so vor dem Anfahren der Gas- und Dampfturbinenanlage soweit teilbefüllt werden, dass eine Optimierung zwischen minimalem Wasseraustoß und optimierter Anfahrzeit erreicht werden kann.

Zusätzliche Maßnahmen, wie Entwässerungsventile 24' und 25 zur Entwässerung der Verdampferheizfläche 12 und/oder eine Entlüftungsleitung 27 mit einem Entlüftungsventil 26, erlauben, dass der Wasserstand des Speisewassers in der Verdampferheizfläche 12 vor jedem Startzustand unabhängig vom Systemdruck eingepegelt werden kann. Um den Wasserstand in der Verdampferheizfläche 12 für die Regelung zu erfassen, ist zudem eine geeignete Höhenstandsmessung installiert. Dazu ist vorteilhafterweise - wie in FIG 2 auch - parallel zu der zumindest einen Verdampferheizfläche 12 eine Messleitung 18 und eine Druckmesseinrichtung 19 zur Höhenstandsmessung des Speisewassers in der zumindest einen Verdampferheizfläche 12 vorgesehen. Dadurch dass die Entlüftungsleitung mit der Dampfleitung 21 zur Dampfableitung aus dem Wasserabscheider 20' und nicht direkt mit der Atmosphäre verbunden ist, kann eine Entlüftung des Überhubrohres ohne eine merkliche Druckabsenkung in der Verdampferheizfläche erfolgen. Dadurch, dass das Ventil 24' vor dem Ventil 25 eingebunden ist, kann das Ventil 24' als einfaches "Auf/Zu"- Ventil ausgelegt werden, während die eigentliche Regelung der Entwässerung der Verdampferheizfläche 12 durch das Ventil 25 erfolgt.

## Patentansprüche

1. Abhitzedampferzeuger, insbesondere Abhitzedampferzeuger in stehender Bauweise, mit
- einem Abgaskanal (10) in dem zumindest eine Verdampferheizfläche (12) und zumindest eine Vorwärmerheizfläche (11) angeordnet sind, wobei die zumindest eine Verdampferheizfläche (12) und die zumindest eine Vorwärmerheizfläche (11) so miteinander verbunden sind, dass speisewasserseitig die zumindest eine Vorwärmerheizfläche (11) der zumindest einen Verdampferheizfläche (12) vorgeschaltet ist,
- und einem Wasserabscheider (20,20') der der zumindest einen Verdampferheizfläche (12) speisewasserseitig nachgeschaltet ist, wobei außerhalb des Abgaskanals (10) und speisewasserseitig zwischen der zumindest einen Vorwärmerheizfläche (11) und der zumindest einen Verdampferheizfläche (12) ein Überhubrohrsystem angeordnet ist, das so ausgebildet ist das Speisewasser nach vollständiger Befüllung der zumindest einen Vorwärmerheizfläche (11) in einem Steigrohr (15') des Überhubrohrsystems einen Überlauf (15''') erreicht und so über ein Fallrohr (15") in die zumindest eine Verdampferheizfläche (12) gelangt,
**dadurch gekennzeichnet, dass** zwischen der zumindest einen Verdampferheizfläche (12) und einer atmosphärische Entspannungseinrichtung (30), eine Entwässerungsleitung (23) mit zumindest einem Entwässerungsventil (24',24,25) zur Entwässerung der zumindest einen Verdampferheizfläche (12) vorgesehen ist.

2. Abhitzedampferzeuger nach Anspruch 1,
**dadurch gekennzeichnet, dass** zwischen dem Überlauf (15''') des Überhubrohrsystems und einer Dampfableitung (21) des Wasserabscheiders (20,20'), eine Entlüftungsleitung (27) mit einem Entlüftungsventil (26) vorgesehen ist.

3. Abhitzedampferzeuger nach Anspruch 1 oder 2,
**dadurch gekennzeichnet, dass** parallel zu der zumindest einen Verdampferheizfläche (12) eine Messleitung (18) und eine Druckmesseinrichtung (19) zur Höhenstandsmessung des Speisewassers in der zumindest einen Verdampferheizfläche (12) vorgesehen ist.

## Claims

1. Waste-heat steam generator, in particular waste-heat steam generator of vertical design, comprising
- an exhaust-gas channel (10) in which at least one evaporator heating surface (12) and at least one preheater heating surface (11) are arranged, wherein the at least one evaporator heating surface (12) and the at least one preheater heating surface (11) are connected to one another in such a way that, on the feed-water side, the at least one preheater heating surface (11) is arranged upstream of the at least one evaporator heating surface (12),
- and a water separator (20, 20') which is arranged downstream of the at least one evaporator heating surface (12) on the feed-water side, wherein outside the exhaust-gas channel (10) and between the at least one preheater heating surface (11) and the at least one evaporator heating surface (12) on the feed-water side, there is arranged an excess pipe length system which is designed in such a way that, after the complete filling of the at least one preheater heating surface (11), feed water, in a riser (15') of the excess pipe length system, reaches an overflow (15''') and thus passes into the at least one evaporator heating surface (12) via a down pipe (15") **characterized in that**,
between the at least one evaporator heating surface (12) and an atmospheric expansion device (30), there is provided a dewatering line (23) with at least one dewatering valve (24', 24, 25) for dewatering the at least one evaporator heating surface (12).

2. Waste-heat steam generator according to Claim 1,
**characterized in that**,
between the overflow (15''') of the excess pipe length system and a steam discharge line (21) of the water separator (20, 20'), there is provided a vent line (27) with a vent valve (26).

3. Waste-heat steam generator according to Claim 1 or 2,
**characterized in that**,
parallel to the at least one evaporator heating surface (12), there is provided a measurement line (18) and a pressure-measurement device (19) for measuring the level of the feed water in the at least one evaporator heating surface (12).

## Revendications

1. Générateur de vapeur à récupération de la chaleur perdue, notamment générateur de vapeur à récupération de la chaleur perdue en mode de construction verticale, comprenant
- un canal (10) pour les gaz perdus, dans lequel sont disposés au moins une surface (12) de chauffe d'évaporateur et au moins une surface (11) de chauffe de préchauffeur, la au moins une surface (12) de chauffe d'évaporateur et la au moins une surface (11) de chauffe de préchauffeur étant reliées l'une à l'autre, de manière à ce que, du côté de l'eau d'alimentation, la au moins une surface (11) de chauffe de préchauffeur soit montée avant la au moins une surface (12) de chauffe d'évaporateur,
- et un séparateur (20, 20') d'eau, qui est monté en aval du côté de l'eau d'alimentation de la au moins une surface (12) de chauffe d'évaporateur, dans lequel, à l'extérieur du canal (10) pour les gaz perdus et du côté de l'eau d'alimentation entre la au moins une surface (11) de chauffe de préchauffeur et la au moins une surface (12) de chauffe d'évaporateur, est disposé un système tubulaire de surélévation, constitué de manière à ce que l'eau d'alimentation, après avoir rempli complètement la au moins une surface (11) de chauffe de préchauffeur, atteigne, dans un tuyau (15') de montée du système tubulaire de surélévation, un trop plein (15''') et arrive ainsi, par un tuyau (15") de descente, dans la au moins une surface (12) de chauffe d'évaporateur,
**caractérisé en ce qu'**
entre la au moins une surface (12) de chauffe d'évaporateur et un dispositif (30) de détente à la pression atmosphérique, est prévu un conduit (23) de drainage, ayant au moins une soupape (24', 24, 25) de drainage pour drainer la au moins une surface (12) de chauffe d'évaporateur.

2. Générateur de vapeur à récupération de la chaleur perdue suivant la revendication 1,
**caractérisé en ce que**
entre le trop plein (15''') du système tubulaire de surélévation et un conduit (21) de sortie de la vapeur du séparateur (20, 20') d'eau, est prévu un conduit (27) de purge d'air, ayant une soupape (26) de purge d'air.

3. Générateur de vapeur à récupération de la chaleur perdue suivant la revendication 1 ou 2,
**caractérisé en ce qu'**
en parallèle à la au moins une surface (12) de chauffe d'évaporateur, est prévu un conduit (18) de mesure et un dispositif (19) de mesure de la pression pour mesurer le niveau de l'eau d'accumulation dans la au moins une surface (12) de chauffe d'évaporateur.
